(19) Europäisches Patentamt
European Patent Office
Office européen des brevets

(11) **EP 1 060 713 B1**

(12) **EUROPÄISCHE PATENTSCHRIFT**

(45) Veröffentlichungstag und Bekanntmachung des Hinweises auf die Patenterteilung:
**14.12.2005 Patentblatt 2005/50**

(51) Int Cl.⁷: **A61C 13/00**, A61C 13/20, H05B 6/64, H05B 6/80

(21) Anmeldenummer: **99111713.6**

(22) Anmeldetag: **17.06.1999**

(54) **Verfahren zur Herstellung von Dentalkeramiken**

Method for manufacturing dental ceramics

Procédé de fabrication de céramiques dentaires

(84) Benannte Vertragsstaaten:
**AT CH DE FR GB IT LI**

(43) Veröffentlichungstag der Anmeldung:
**20.12.2000 Patentblatt 2000/51**

(73) Patentinhaber: **Wieland Dental + Technik GmbH & Co. KG**
**75179 Pforzheim (DE)**

(72) Erfinder:
• **Laubersheimer, Jürgen**
**76307 Karlsbad (DE)**
• **Möbius, Arnold**
**76344 Eggenstein (DE)**
• **Mühleisen, Markus**
**70839 Gerlingen (DE)**

(74) Vertreter: **Patentanwälte**
**Ruff, Wilhelm, Beier, Dauster & Partner**
**Postfach 10 40 36**
**70035 Stuttgart (DE)**

(56) Entgegenhaltungen:
EP-A- 1 029 515          DE-A- 3 630 049
DE-A- 3 923 968          FR-A- 2 507 296
US-A- 5 621 035

**Beschreibung**

Die Erfindung betrifft ein Verfahren zur Herstellung von Dentalkeramiken gemäß dem Oberbegriff von Anspruch 1.

Dentalkeramiken im Sinne der Anmeldung sind insbesondere alle in der Zahntechnik verwendete Zahnersatzteile, die unter Verwendung mindestens eines keramischen Werkstoffes hergestellt werden. Ein in einem zahntechnischen Labor hergestellter Zahnersatz besteht in der Regel aus einem auf einem präparierten Zahnstumpf paßgenauen Unterbau und einer keramischen Verblendung. Da der Unterbau direkten Kontakt zur verbleibenden Zahnhartsubstanz und/oder dem umgebenden Zahnfleisch hat, muß er korrosionsresistent und biokompatibel, also körper- und gewebeverträglich sein und gleichzeitig exakt auf den präparierten Zahnstumpf passen. Ein Unterbau besteht daher üblicherweise aus geeignetem Metall, wie Gold, kann aber auch aus keramischem Material bestehen.

Keramische Verblendungen werden vor allem deshalb gewählt, weil geeignete Keramiken chemisch inert gegen alle in der Mundhöhle auftretenden Medien sind und so ausgewählt werden können, daß sie aufgrund ihrer hellen, auf die übrigen Zähne anpaßbaren Farbe von den natürlichen Zähnen praktisch ununterscheidbar sind und damit auch die ästhetischen Ansprüche von Patienten befriedigen.

Die Herstellung einer keramischen Verblendung ist nach wie vor Handarbeit und daher zeitintensiv. Ein erheblicher Teil des Zeitaufwandes liegt dabei in der Trockenzeit und in den Heiz-, Brenn- und Abkühlzeiten bekannter Öfen begründet. Üblicherweise wird die Keramik als mit Flüssigkeit (meist Wasser) angemischte, teigige Masse mit einem Pinsel in Schichten auf den Unterbau aufgetragen, getrocknet und jeweils bei Temperaturen von etwa 700 °C bis höchstens 1000 °C gebrannt. Nach dem Abkühlen wird dann die nächste Schicht aufgepinselt, bis nach typischerweise ca. 4 bis 6 Schichtungen die endgültige, vom Techniker entsprechend den Vorgaben des Zahnarztes geplante Zahnform und -farbe erreicht ist. Je nach Anzahl der Schichtungen, Material- und Ofenparametern (Aufheizrate, Brenntemperatur und -zeit, Abkühlgeschwindigkeit) sowie Routine und Fähigkeiten des Zahntechnikers liegt der gesamte Zeitaufwand zur Herstellung einer keramischen Verblendung, beispielsweise bei einer Krone oder einer Brücke, in der Grö-Benordnung von etwa 3 - 5 Stunden bei Brennschritten von jeweils etwa 15 - 25 Minuten reiner Ofenzeit.

Die DE-A1-36 30 049 zeigt ein Gießverfahren nach dem Prinzip der verlorenen Form, bei dem das in der Form zunächst enthaltene Wachs mit Hilfe von Mikrowellenstrahlung ausgeschmolzen wird. Die direkte Wärmebehandlung von Dentalkeramiken mit Mikrowellenstrahlung ist dort nicht angesprochen.

Die US-A-5,621,035 befasst sich mit der Herstellung keramischer Füllpartikel für dentale Füllungscomposites, d.h. Füllungen aus einer Polymermatrix mit eingelagerten keramischen Partikeln. Bei der Herstellung der keramischen Füllungspartikel ist ein Trocknungsschritt mit Hilfe von Mikrowellenstrahlung eingeschlossen. Diese Mikrowellentrocknung erfolgt bei Temperaturen bis maximal 150°C. Zum Brennen der Keramikteilchen werden diese anschließend in einen konventionellen Brennofen überführt.

In der DE-A1-39 23 968 ist ein Verfahren zum Aufbringen von Korrosionsschutzschichten auf Metalloberflächen durch Erhitzen des Metalls in einer Atmosphäre aus verschiedenen Reaktionspartnern beschrieben. In diesem Verfahren werden lediglich die Metalle selbst mit Hilfe von Mikrowellenstrahlung auf höhere Temperaturen erhitzt. Eine Wärmebehandlung von Keramikmaterialien ist dort nicht angesprochen.

Die EP-A1- 1 029 515 zeigt einen Ofen, der zum Ausschmelzen eines Wachsmaterials aus einer Gießform für den Metallguss von Dentalteilen vorgesehen ist. Neben einer auf das Ausschmelzen von solchen Wachsen ausgelegten Mikrowellen-Heizeinrichtung weist dieser Ofen eine weitere konventionelle Heizeinrichtung auf, die aber nur dazu dient, das aufgeschmolzene Wachs flüssig zu halten und aus der Apparatur entfernen zu können. Die Wärmebehandlung von Keramikmaterialien ist nicht angesprochen.

Der Erfindung liegt die Aufgabe zugrunde, die Herstellung von Dentalkeramiken, insbesondere von keramisch verblendetem Zahnersatz, effizienter und kostengünstiger zu gestalten. Dabei sollen die fertiggestellten Dentalkeramikteile mindestens gleich gute Eigenschaften besitzen wie nach herkömmlichen Verfahren hergestellte Dentalkeramiken. Wenn möglich, sollen diese Eigenschaften sogar noch verbessert werden.

Diese Aufgaben werden gelöst durch ein Verfahren mit den Merkmalen von Anspruch 1 Bevorzugte Ausführungsformen sind in den abhängigen Ansprüchen angegeben. Der Inhalt sämtlicher Ansprüche wird durch Bezugnahme zum Inhalt dieser Beschreibung gemacht.

Das erfindungsgemäße Verfahren der eingangs erwähnten Art zeichnet sich dadurch aus, daß beim Aufheizen auf die Brenntemperatur Mikrowellenstrahlung zur Erwärmung der Dentalkeramik eingesetzt wird. Eine erhebliche Zeitersparnis kann dadurch erzielt werden. Es hat sich erstaunlicherweise gezeigt, daß durch den Einsatz geeigneter Mikrowellenstrahlung erhebliche zeiteinsparungen möglich sind, wenn die Mikrowellenstrahlung zusätlich zur Trocknung der Dentalkeramik, beispielsweise nach Aufpinseln einer frischen Schicht, eingesetzt wird. Hierzu können unter Beteiligung von Mikrowellenstrahlung Temperaturen von weniger als 200 °C, insbesondere um 100 °C, erzeugt werden. Im Gegensatz zu herkömmlichen Öfen, bei denen typische Aufheizraten in der Größenordnung von ca. 50 °C/min liegen können, können mit Unterstützung von Mikrowellenstrahlung erheblich höhere Aufheizraten von beispielsweise mehr als 100 °C/min, insbesondere zwischen 200 °C/min und 600 °C/min, erzielt werden. Bei typischen Endtemperaturen in der Größenordnung zwischen ca. 700 °C und ca. 1000 °C können sich daher allein beim Aufheizen Zeiteinsparungen von mehreren Minuten pro Behandlungsschritt der Dentalkeramik ergeben.

Es kann damit als eine wesentliche Lehre der Erfindung angesehen werden, daß durch den Einsatz von Mikrowellenstrahlung zur Erzeugung von für keramische Werkstoffe relativ moderaten Temperaturen von in der Regel deutlich unter 1000 °C, wie sie beim Aufheizen vorliegen, gerade bei den speziellen Anforderungen, wie sie bei Dentalkeramiken vorliegen, erhebliche Zeitvorteile und damit auch erhebliche Kostenvorteile erzielbar sind. Zwar ist der Einsatz von Mikrowellenstrahlung beim Brennen anderer Keramiken, zum Beispiel bei Geschirr, schon bekannt. Dort werden jedoch Temperaturen jenseits von 1200 °C, insbesondere in der Größenordnung bis zu 1600 °C, sowie typische Brennzeiten von mehreren Stunden oder sogar Tagen angewendet. Daß sich durch den Einsatz von Mikrowellenstrahlung im Dentalbereich, wo bei deutlich tieferen Temperaturen und erheblich kürzeren Wärmcbehandlungszeiten gearbeitet wird, deutliche Vorteile gegenüber dem Stand der Technik ergeben könnten, ist bisher nicht erkannt worden.

Besonders gute Ergebnisse sind erzielbar, wenn die Mikrowellenstrahlung beim Aufheizen auf die Brenntemperatur zusätzlich zu einer Erwärmung der Dentalkeramik durch mindestens eine weitere, von außen auf das Erwärmungsgut wirkenden Heizung eingesetzt wird. Ein entsprechender Ofen hat also zusätzlich zu den Einrichtungen, die für die Mikrowellenheizung erforderlich sind, mindestens eine konventionelle, auf Konvektion, Wärmeleitung und/oder Wärmestrahlung basierende Heizung und kann daher auch als Ofen bezeichnet werden. Eine Mikrowellenheizung hat den Vorteil, daß die Wärme direkt im Erwärmungsgut erzeugt und deponiert wird, wodurch im Gegensatz zu einer konventionellen Heizung kein Temperaturgradient von außen nach innen erzeugt wird. Es lassen sich insbesondere die erwähnten schnellen Aufheizraten und auch eine schnelle Trocknung unterstützen. Befindet sich das Erwärmungsgut in einer kalten Umgebung, so baut sich bei Mikrowellenheizung in der Regel ein inverser Temperaturgradient von innen nach außen auf. Dieser wird durch eine konventionelle Außenheizung teilweise oder ganz kompensiert. Eine sog. Hybridheizung der vorgeschlagenen Art fördert somit eine im Vergleich zu Einzelheizungen wesentlich gleichmäßigere Temperaturverteilung, wodurch insbesondere thermomechanische Spannungen vermindert oder vermieden werden können. Während bei Einsatz nur einer Heizung, insbesondere einer konventionellen Heizung, zur Vermeidung übermäßiger thermomechanischer Spannungen die Aufheizrate nur relativ gering sein darf, was entsprechend längere Aufheizzeiten erfordert, wird dieses Problem bei einer Hybridheizung der vorgeschlagenen Art weitgehend vermieden, so daß ohne Gefahr der Brenngutzerstörung schnellere Aufheizraten realisierbar sind.

Bei einer besonders an die beschriebenen Besonderheiten bei der Herstellung von Dentalkeramiken angepaßten Verfahrensvariante wird vor oder während des Wärmebehandlungsschrittes, insbesondere nach dem Aufheizen in den Bereich der Brenntemperatur, in der Umgebung der Dentalkeramik ein Unterdruck erzeugt. Diese Evakuierung des Ofeninnenraumes oder Aufnahmeraumes kann dazu dienen, daß Luft, die beispielsweise durch das Auftragen der Keramikmasse mit einem Pinsel auf das Dentalteil in dieses eingebracht wurde, abgezogen wird. Typische geeignete Unterdrücke können unterhalb von ca. 200 mbar, insbesondere zwischen ca. 50 und 150 mbar, beispielsweise bei etwa 100 mbar, liegen. Geeignete Vakuumzeiten können sehr kurz sein und beispielsweise zwischen ca. 30 Sekunden und ca 5 Minuten liegen, insbesondere im Bereich von etwa 1 bis 2 Minuten. Bei dieser Verfahrensvariante bilden die Vakuumzeit und die eigentliche Brennzeit zusammen die Haltezeit, bei der die Dentalkeramik auf ihre Maximaltemperatur aufgeheizt ist. Die genannte schwache Evakuierung unterstützt die Schaffung besonders dichter und fehlerarmer bzw. fehlerfreier Dentalkeramiken.

Da keramisch verblendeter Zahnersatz, wie erwähnt, aus mindestens zwei unterschiedlichen Werkstoffen aufgebaut sind, nämlich einem, vorzugsweise metallischen, Unterbau und mindestens einer auf den Unterbau aufgebrachten keramischen Schicht, ist die Wärmebehandlung zweckmäßig so durchzuführen, daß keiner der Werkstoffe über seinen Schmelzpunkt erwärmt wird. Dieses Problem, das bei der Behandlung konventioneller Keramiken, beispielsweise von Geschirr, nicht auftritt, kann eine besonders bevorzugte angepaßte Verfahrensführung bedingen, beispielsweise derart, daß bei Verwendung von Unterbauten aus Gold (Schmelzpunkt bei 1063 °C) die Maximaltemperatur deutlich unterhalb der Schmelztemperatur des Metalls bleiben muß.

Es hat sich auch gezeigt, daß bei Dentalkeramiken, in denen meist eine Grenzschicht zwischen einem elektrisch gut leitenden metallischen Werkstoff und einem keramischen Werkstoff mit geringer Leitfähigkeit existiert, besondere Anpassungen der Feldverteilung und der Verfahrensführung zweckmäßig sind. Besonders gute Ergebnisse können dabei dann erzielt werden, wenn bei dem Wärmebehandlungsschritte am Ort der Dentalkeramik ein räumlich veränderliches, insbesondere lokal zirkular polarisiertes Mikrowellenfeld erzeugt wird. Dies kann kostengünstig mit geringem konstruktivem Aufwand beispielsweise dadurch erreicht werden, daß die Dentalkeramik zumindest während der Einwirkung der Mikrowellenstrahlung mindestens zeitweise bewegt, insbesondere gedreht wird, was zum Beispiel durch eine Anordnung auf einem Drehteller oder auf einem rotierbaren Halter für die Dentalkeramik realisierbar ist. Auf diesem Drehteller können mehrere Dentalkeramikteile, die gleichzeitig wärmebehandelt werden, angeordnet sein. Der Drehteller besteht vorzugsweise aus einem elektrisch isolierendem Material, beispielsweise Schamott. Grundsätzlich ist es auch möglich, zur Erzeugung eines rotierenden Mikrowellenfeldes den die Dentalkeramik enthaltenden Teil des Ofens oder den Unterteil des Applikators drehbar auszubilden. Eine weitere Möglichkeit, ein rotierendes Mikrowellenfeld ohne bewegliche Teile allein durch zweckmäßige Geometrie von Aufnahmeraum und Mikrowellen-Zuleitung zu erzeugen, wird im Zusammenhang mit einem Ausführungsbeispiel näher beschrieben.

Die durch derartige Maßnahmen erzielbare erhebliche Verbesserung der Ergebnisse kann möglicherweise wie folgt erklärt werden. Bei einer keramischen Verblendung einer metallischen Unterkonstruktion stellt sich das Brenngut als ein metallischer Hohlkörper dar, der mit einem Mantel aus Keramikmasse umgeben ist. Genauer gesagt hat man ein Dreischichtproblem, bei dem ein Umgebungsmedium (Luft oder Vakuum) an eine schwach leitfähige Keramik und diese an einen metallischen Leiter grenzt, den man näherungsweise als idealen Leiter betrachten kann. Für Bestrahlung einer derartigen Anordnung mit elektromagnetischer Strahlung ergibt sich aus physikalischen Erwägungen (MAXWELL'sche Gleichungen), daß ein auf einen idealen Leiter einfallendes Feld an dessen Oberfläche vollständig reflektiert wird bzw. daß im Bereich der Grenzfläche bzw. Trennfläche das elektrische Feld nur eine Komponente senkrecht zur Trennfläche hat. Es muß also versucht werden, das Gut so zu bestrahlen, daß schon an der Grenzfläche Luft zu Keramik die elektrische Feldstärke einen wesentlichen Anteil an normaler Feldstärke hat, daß also das einfallende Feld so polarisiert ist, daß der elektrische Feldvektor in der Einfallsebene (definiert durch die Ebenennormale und die Richtung des einfallenden Feldes) liegt.

Weiter ist zu beachten, daß es bei Mikrowelleneinstrahlung zu Reflexion und Brechung an der Trennfläche kommt, wobei sich die Beträge von reflektiertem und transmittiertem Feld für die Fälle der Polarisation des elektrischen Feldvektors in der Einfallsebene und senkrecht zur Einfallsebene unterscheiden. Für beide Fälle können für die Einfallswinkel zwischen 0° und 90° Kurvenscharen in Abhängigkeit der Verhältnisse der Dielektrizitätskonstanten der angrenzenden Medien dargestellt werden. Die Kurven unterscheiden sich am stärksten für den Fall des sog. BREWSTER-Winkels, dem Einfallswinkel, bei dem der transmittierte Strahl und der reflektierte Strahl senkrecht aufeinander stehen. Es gibt bei der Polarisation des elektrischen Feldstärkevektors parallel zur Einfallsebene keinen reflektierten Strahl. Somit ist anzustreben, ein einfallendes Feld zu haben, dessen elektrischer Feldvektor, wie erwähnt, in der Einfallsebene polarisiert ist und das im BREWSTER-Winkel auf die Trennfläche bzw. Grenzfläche fällt.

Bei einer unebenen, beispielsweise zahnförmigen Trennfläche, wie der Luft-Keramik-Grenzfläche eines modellierten Zahnes, sind diese Bedingungen nicht gleichzeitig auf der gesamten Oberfläche zu realisieren. Die anzustrebenden Bedingungen für den Einfall im BREWSTER-Winkel kann in zeitlich periodischen Abständen an unterschiedlichen Stellen jedoch erfüllt werden, wenn beispielsweise die Feldverteilung rotiert, d.h. das lokale Feld an der Stelle des Erwärmungsgutes zirkular polarisiert ist oder wenn ein linear polarisiertes Feld steht und das Erwärmungsgut gedreht wird, indem es beispielsweise auf einem Drehteller gelagert ist. Ein besonders hoher Wirkungsgrad der Mikrowellenheizung, d.h. ein großes Verhältnis von in einen Prozeßraum eingestrahlter Energie zur tatsächlich zur Erwärmung genutzten bzw. umgesetzten Energie kann dadurch erzielt werden, daß die Mikrowellenstrahlung in Umgebungsbereich der Dentalkeramik derart umgelenkt, insbesondere reflektiert wird, daß Mikrowellenstrahlung mehrfach auf die Dentalkeramik trifft. In bevorzugten Fällen, bei denen die Wellenlänge der Mikrowellen in der Größenordnung eines Durchmessers des Prozeßraumes bzw. Aufnahmeraumes liegt, ist eine definierte Feldverteilung anzustreben. Bei der für industrielle Mikrowellenanwendungen erlaubten Frequenz von 2,45 GHz ergibt sich eine Wellenlänge von 122 mm, so daß ein Aufnahmeraum bzw. Prozeßraum in zumindest zwei Richtungen einen Durchmesser in der Größenordnung der Hälfte dieser Wellenlänge haben sollte. Eine angestrebte definierte Feldverteilung ist vorzugsweise mit Hilfe eines sog. Resonators erzielbar, der eine Resonanzüberhöhung bewirkt, die abhängig von seinen Eigenschaften ist. Hierzu kann der Aufnahmeraum mit einem leitfähigen Wandmaterial ausgekleidet werden, das die Mikrowellen so lange hin und her reflektiert, bis sie im Gut absorbiert werden. Grundsätzlich geeignet sind metallische Materialien mit einem Schmelzpunkt deutlich oberhalb von ca. 1000 °C und hoher Oxidationsresistenz bei diesen Temperaturen. Diese Bedingungen werden beispielsweise durch ein dünnes Blech aus Platin (Smp 1772 °C) erfüllt.

Um das bereits erwähnte, an der Stelle des Brenngutes homogene und lokal zirkular polarisierte Feld zu erzeugen, kann der Resonator im wesentlichen zylindrisch gestaltet und so dimensioniert sein, daß in ihm die $TE_{11}$ Grundmode der Mikrowellen anschwingen kann, die ihr nahezu linear polarisiertes Maximum auf der Zylinderachse hat, wo demzufolge das zu erwärmende Gut zweckmäßig zu positionieren ist. Entsprechend der für industrielle Mikrowellenanwendungen bevorzugten Frequenz von 2,45 GHz sind Durchmesser in der Größenordnung von ca. 100 mm bevorzugt, die gerade auch zum Brennen der üblichen Verblendkörper aus dem Dentalbereich mit typischen Maximalabmessungen von ca. 1 - ca. 6 cm sehr gut geeignet sind.

Nach der Erfindung kann, wie erwähnt, sowohl ausschließlich mit einer Mikrowellenheizung, als auch mit einer Mikrowellen-Zusatzheizung gearbeitet werden, wobei letzteres bevorzugt ist. Erfolgt die Wärmeerzeugung ausschließlich mittels Mikrowellenstrahlung, so kann es erforderlich sein, das zu erwärmende Gut zu isolieren, was bei normalem Einsatz des Verfahrens im Zahntechnikerlabor meist hinderlich ist. Es kann daher zweckmäßig sein, die Dentalkeramik mindestens teilweise indirekt mittels Mikrowellenstrahlen zu erwärmen, indem im Bereich der Dentalkeramik mindestens ein der Mikrowellenstrahlung aussetzbares Suszeptorelement angeordnet wird, das derart ausgebildet ist, daß es mittels Mikrowellenstrahlung erwärmbar ist und daß es die Wärme an die Dentalkeramik abgibt, insbesondere in Form von Wärmestrahlung. Geeignete Suszeptoren können beispielsweise aus Siliciumcarbid bestehen.

Anders als bei konventionellen Heizverfahren stellen bei der Heizung mit Hilfe von Mikrowellen die Temperaturmessung und die Temperaturregelung ein besonderes Problem dar. Die Temperaturmessung und -steuerung ist im Falle der Wärmebehandlung von Dentalkeramiken deshalb besonders zu beachten, da hier zur Steigerung der Produktivität und zur Kostenminimierung möglichst kurze Gesamt-Wärmebehandlungszeiten angestrebt werden.

Erfindungsgemäß können verschiedene Verfahren zur Temperaturmessung oder -bestimmung alternativ oder kumulativ eingesetzt werden. Bei einer Variante wird zur Temperaturmessung mindestens ein Temperatursensor, insbesondere ein Thermoelement, derart im Bereich der Dentalkeramik angeordnet, daß der Temperatursensor mindestens teilweise, insbesondere durch einen metallischen Unterbau der Dentalkeramik, gegen die Mikrowellenstrahlung abgeschirmt wird. Die in der Regel vorhandenen, mindestens einseitig offenen metallischen Hohlkörper der Unterbauten, die bei der Mikrowellenheizung die beschriebenen Probleme verursachen, können also bzgl. der Temperaturmessung sehr vorteilhaft genutzt werden.

Bei einer anderen Variante, bei der ein die Dentalkeramik umgebender Resonator verwendet wird, ist dieser zweckmäßig derart auf die Dentalkeramik abgestimmt, daß die Temperatur der Dentalkeramik nicht signifikant höher werden kann als diejenige des Ofeninnenraumes, insbesondere des Resonators. Dies vereinfacht die Regelung drastisch und ermöglicht es, daß die Temperaturmessung an prinzipiell jedem Ort im Ofeninnenraum vorgenommen werden kann, insbesondere in der Nähe des Resonators. Die vorgeschlagene Abstimmung von Resonator und Dentalkeramik aufeinander kann auf Grundlage folgender Überlegungen erläutert werden. Wird das Gut im Prozeßraum durch Mikrowellen erhitzt, so strahlt es nach der Gleichung des Schwarzen Strahlers Wärme auf die Resonatorwände ab. Diese werfen die Wärme nur zum Teil auf das Gut zurück. Der temperaturabhängige Wärmeverlust für umschlossene Flächen errechnet sich nach der Gleichung:

$$P = A_1 \cdot \frac{1}{\frac{1}{\varepsilon_1} + \frac{A_1}{A_2}\left(\frac{1}{\varepsilon_2} - 1\right)} \cdot C_\delta \cdot \left[\left(\frac{T_1}{100}\right)^4 - \left(\frac{T_2}{100}\right)^4\right]; \qquad C_\delta = 5.77 \frac{W}{m^2 K^4} \qquad (1)$$

Dabei sind $T_i$ die Temperaturen, $\varepsilon_i$ die Emissivitäten und $A_i$ die Oberflächen des Erwärmungsgutes (Index 1) bzw. des Resonators (Index 2). Die Emissivität hat für Keramiken typische Werte $\leq 1$, für sehr gut leitende und verspiegelte Oberflächen dagegen Werte von $\geq 0,02$. Zweckmäßig wird nun der Prozeßraum so an die Dentalkeramik angepaßt, daß das Verhältnis $A_1/A_2$ sehr klein gegen das Verhältnis $\varepsilon_2/\varepsilon_1$ ist. Diese Ungleichung ist also besser erfüllt, je größer die Oberfläche des Resonators und je größer dessen Emissivität ist. Bei Vorliegen der durch die Ungleichung angegebene Bedingungen vereinfacht sich die Berechnung des temperaturabhängigen Wärmeverlustes zu

$$P = A_1 \cdot \varepsilon_1 \cdot C_\delta \cdot \left[\left(\frac{T_1}{100}\right)^4 - \left(\frac{T_2}{100}\right)^4\right], \qquad (2)$$

Dies bedeutet, daß bei entsprechenden Bedingungen die Abstrahlung praktisch nur noch von den Eigenschaften des Erwärmungsgutes, d.h. der Dentalkeramik, abhängt. Bei höheren Temperaturen erhält man bereits bei geringen Unterschieden zwischen den Temperaturen $T_1$ und $T_2$ von Dentalkeramik bzw. Resonator eine Abstrahlungsleistung, die größer ist als der Eintrag durch Mikrowellen, so daß das Erwärmungsgut unter diesen Bedingungen durch die Mikrowellenstrahlung nicht heißer werden kann als der Ofen. Dadurch wird die Temperatur der Dentalkeramik durch geeignete Anpassung der Resonatoreigenschaften an diejenigen der Ofenwand begrenzt. Eine geeignete Steuerung hat dann vorteilhaft nur noch dafür zu sorgen, daß die Mikrowellenleistung nicht zu hoch ist, daß der sich durch die Abstrahlung einstellende Temperaturgradient von innen nach außen nicht zur Zerstörung des Erwärmungsgutes führt bzw. daß die Mikrowellenleistung nicht so niedrig ist, daß die Temperatur des Guts deutlich niedriger ist als die der Wand, wodurch man wieder eine thermische Heizung hätte.

Wie erwähnt, vereinfachen die beschriebenen Maßnahmen die Temperaturregelung drastisch und bedeuten gleichzeitig, daß die Temperaturmessung an der (von außen zugänglichen) Ofenwand vorgenommen werden kann. Die Vereinfachung der Regelanforderung wird dadurch erreicht, daß - anders als bei einer isolierten Probe - die Temperatur nicht "davonlaufen" kann. Wird eine isolierte Probe geheizt, so steigt die Temperatur mit der eingebrachten Leistung. Dadurch könnte es passieren, daß die maximal erlaubte Temperatur überschritten wird. Eine Regelung müßte dann sofort eingreifen. Dies ist nicht erforderlich, wenn das Flächenverhältnis wie oben beschrieben gewählt wird. Dadurch ergibt sich eine drastische Vereinfachung der Regelaufgabe. Sie wird dadurch erreicht, daß das Gut bei Überhitzung Wärme auf die Ofenwände strahlt. Dadurch könnte wiederum ein Gradient von innen nach außen entstehen. Wird dieser zu groß, kann es Gefahr für das Erwärmungsgut bedeuten. Während dies bei aufzuheizenden Vollkörpern problematisch sein könnte, ist die beschriebene Gefahr bei Dentalkeramiken in der Regel gering, da sie als Quasihohlkörper radiale Temperaturgradienten leichter "verkraften" als Vollkörper.

Da bei hohen Temperaturen die Temperatur der Reaktorwand die des Erwärmungsgutes begrenzt, kann die Messung der Temperatur der Wand die des Gutes ersetzen, wenn ausreichend Leistung auf das Gut gelangt.

Die obigen Gleichungen gelten streng genommen nur dann, wenn das Erwärmungsgut vollständig von einer sich auf einheitlicher Temperatur befindenden Wand umschlossen ist. Diese Bedingungen werden bei einer bevorzugten Ausführungsform eines Ofens dadurch erfüllt, daß dem Ofen eine in dem Aufnahmeraum anordenbare, vorzugsweise einlegbare, für Mikrowellenstrahlung durchlässige und durch Mikrowellenstrahlung erwärmbare Trenneinrichtung zur Aufteilung des Aufnahmeraumes in einen das Erwärmungsgut enthaltenden Brennraum und einen Kaltraum zugeordnet ist. Insbesondere bietet sich an, eine Schamottscheibe geeigneter Dicke in den vorzugsweise zylindrischen Reaktor zu legen.

Die beschriebenen Merkmale und weitere Merkmale der Erfindung ergeben sich aus der nachfolgenden Beschreibung von bevorzugten Ausführungsformen in Verbindung mit den Unteransprüchen und den Zeichnungen. Hierbei können die einzelnen Merkmale jeweils für sich oder zu mehreren in Kombination miteinander verwirklicht sein. In den Zeichnungen zeigen:

Fig. 1   einen schematischen Vertikal-Längsschnitt durch eine Ausführungsform eines Hybrid-Ofens zur erfindungsgemäßen-Wärmebehandlung von Dentalkeramiken,

Fig. 2   einen Querschnitt durch den Ofen in Fig. 1 entlang der Linie II-II,

Fig. 3   eine Tabelle mit typischen Ofenzeiten (ohne Abkühlzeiten) bei der Herstellung einer Keramik-Verblendung mit einer niedrigschmelzenden Keramik bei Verwendung eines herkömmlichen Ofens,

Fig. 4   eine Tabelle mit entsprechenden Ofenzeiten (ohne Abkühlzeiten) bei Verwendung eines Mikrowellen-Hybrid-Ofens der Erfindung und

Fig. 5   eine Vergleichstabelle mit typischen Ofenzeiten (ohne Abkühlzeiten) für verschiedene Brennschritte in einem konventionellen Ofen und in einem Hybrid-Ofen der Erfindung.

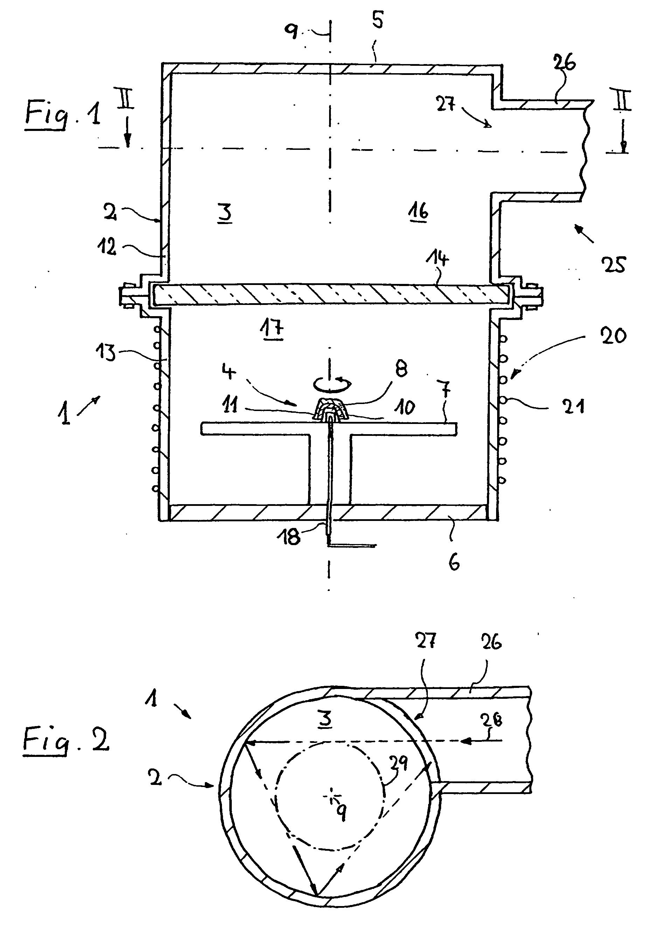

Die schematische Seitenansicht in Fig. 1 zeigt eine Ausführungsform eines Brennofens 1, mit dem Keramiken, insbesondere Dentalkeramiken, unter Erfüllung der in der Zahntechnik gestellten Anforderungen erfindungsgemäß getrocknet und gebrannt werden können. Der speziell auf diese Anforderungen optimierte Ofen 1 hat einen mehrteiligen, im wesentlichen kreiszylindrisch geformten, metallischen Reaktorbehälter 2, der einen im wesentlichen kreiszylindrischen Aufnahmeraum 3 für die zu behandelnden Dentalkeramiken 4 umschließt. Der Aufnahmeraum 3 hat einen Durchmesser von ca. 10 cm und wird nach oben durch eine ebene, kreisförmige Endplatte 5 und nach unten durch eine ebenfalls ebene, kreisförmige, mit Hilfe einer nicht gezeigten Hubeinrichtung vertikal bewegliche untere Endplatte 6 begrenzt, die paßgenau in den zylindrischen Mantel des Reaktors einführbar ist. An der Oberseite der unteren Endplatte 6 ist ein durch einen nicht gezeigten Drehantrieb antreibbarer Drehteller 7 drehbar gelagert. Auf dessen Oberseite befindet sich mittig eine Halterung 8, an der eine zu behandelnde Dentalkeramik beispielsweise durch Aufstecken befestigt werden kann. Durch die Halterung ist eine Anordnung der Dentalkeramik im Bereich der Zylinderachse 9 des Reaktors sichergestellt. Die Dentalkeramik 4 hat im Beispiel einen zahnförmigen metallischen Unterbau 10, der auf die Halterung 8 aufgesteckt ist, und eine die Außenseite des Metallteils abdeckende keramische Verblendung 11, die aus mehreren aufeinanderfolgend aufzubringenden und zu brennenden Schichten besteht. In einer Ausnehmung im Inneren des Halterung 8 sitzt die temperatursensitive Spitze eines Thermoelementes 18. Sie ist nach oben und seitlich vom hutförmigen Unterbau umgeben, der das Thermoelement gegen die Einwirkung der Mikrowellenstrahlung abschirmt und damit eine zuverlässige Temperäturmessung am Ort der Dentalkeramik 4 ermöglicht. Wie schon erwähnt, kann ein Unterbau auch aus keramischem Material bestehen, wodurch im wesentlichen vollständig aus Keramikmaterial bestehende Dentalkeramiken geschaffen werden.

Der Reaktor 2 hat ein etwa topfförmiges Reaktoroberteil 12, das mit einem im wesentlichen zylindrischen Reaktorunterteil 13 entlang einer Flanschverbindung im wesentlichen gasdicht verbindbar ist. Oberteil und/oder Unterteil können über geeignete Einrichtungen anhebbar, absenkbar und/oder verschiebbar ausgebildet sein. Über eine angeschlossene Vakuumpumpe kann der geschlossene Aufnahmeraum auf Unterdrücke im Bereich von ca. 100 mbar evakuiert werden. Im Bereich der Flanschverbindung ist eine mikrowellendurchlässige Schamottscheibe 14 eingelegt, die einen die Keramik 4 enthaltenden unteren Teilraum 15 von einem oberen Teilraum 16 trennt.

Zur Beheizung der Dentalkeramik 4 (Verblendkörper) sind zwei nach unterschiedlichen Prinzipien der Wärmeerzeugung arbeitende Heizeinrichtungen vorgesehen, die alternativ oder in Kombination ansteuerbar sind. Eine im folgenden auch als thermische Heizung bezeichnete konventionelle Heizeinrichtung 20 umfaßt eine das Reaktorunterteil außen umgebende Heizwicklung 21, die beispielsweise mit Rohrheizkörpern aufgebaut sein kann, die sich an der Außenseite des Reaktorunterteils befinden. Durch die Aufgabe von Strom auf die Heizwicklung 21 wird die Reaktoraußenwand erwärmt und Wärme wird im wesentlichen symmetrisch zur Zylinderachse 9 von radial außen auf die Dentalkeramik 4 eingestrahlt. Der Wärmeeintrag durch diese Außenheizung bewirkt in der Dentalkeramik einen von außen nach innen fallenden Temperaturgradienten. Diese Heizung ist während des Ofenbetriebes in der Regel durchgängig eingeschaltet.

Eine Mikrowellen-Heizeinrichtung 25 umfaßt einen durch den Reaktorbehälter gebildeten, zylindrischen Resonator 2 mit einem Durchmesser von ca. 10 cm, dessen Innenwandung ein dünnes Blech aus Platin aufweist. Zur Erzeugung der Mikrowellen ist ein durch ein geeignetes Netzteil gespeister, nicht gezeigter Mikrowellengenerator vorgesehen, der Mikrowellen bei einer Frequenz von 2,45 GHz erzeugt, die über geeignete Einkoppelmittel in den Resonator gelangen. Die Einkoppelmittel können in bekannter Weise Launcher, Isolatoren, Wellenleiterstücke, Abstimmer und Richtkoppler enthalten. Bei der gezeigten Ausführungsform mündet ein horizontaler Speisewellen-Hohlleiter 26 im Bereich einer Einkopplungsöffnung 27 horizontal in das Reaktoroberteil 12. Wie in Fig. 2 zu erkennen ist, ist der Speisewellenleiter so ausgerichtet, daß die einzukoppelnde Mikrowellenstrahlung in einer solcher Richtung auf die Einkopplungsöffnung trifft, daß ein die Ausbreitungsrichtung in der Mitte der Einkopplungsöffnung beschreibender Ausbreitungsvektor 28 nicht auf die Achse 9 des zylindrischen Resonatorraumes weist, sondern tangential zur Kaustik 29 der Grundmode der eingeleiteten Mikrowellen. Dadurch wird im Reaktor bzw. Applikator eine zumindest teilweise rotierende Mode angeregt, die ihre Rotationsrichtung auch dann beibehält, wenn sie an den durch die Endplatten 5, 6 gebildeten axialen Enden des Reaktorraumes reflektiert wird. Wenn die Mode wieder den Bereich der Einkopplungsöffnung erreicht, so geht nur ein geringer Teil der Leistung durch den Wellenleiter 26 verloren, während der überwiegende Teil in den Reaktorinnenraum und damit wieder in Richtung Dentalkeramik 4 reflektiert wird. Dadurch kann sich im zylindrischen Resonator 2 eine Resonanzüberhöhung ausbilden, deren Stärke in erster Näherung von den Eigenschaften des absorbierenden Gutes, nämlich der Dentalkeramik 4, unabhängig ist. Die Mikrowelleneinkopplung kann im übrigen so erfolgen, wie in der DE 195 28 343 beschrieben, deren diesbezüglichen Merkmale durch Bezugnahme zum Gegenstand dieser Anmeldung gemacht werden. Auf die entsprechenden theoretischen Erläuterungen wird verwiesen. Der Anteil an rotierender Mode läßt sich erhöhen, wenn man an der Stelle der Einkopplung einen koaxialen Innenleiter anbringt und mit dessen Hilfe eine Art Wendeltreppe im zylindrischen Resonator anbringt, die die Feldverteilung auf eine helixförmige Bahn zwingt. Eine solche Einkoppelstruktur wurde erstmals auf der 2. Klausurtagung: Mikrowelleneinsatz in den Materialwissenschaften, der chemischen Verfahrenstechnik und der Festkörperchemie, Dortmund, Marez 1998, von den Autoren J. Geerk und A. Möbius vorgestellt und wird ebenfalls durch Bezugnahme zum Gegenstand dieser Anmeldung gemacht.

Die in der beschriebenen Weise eingekoppelte Mikrowellenstrahlung durchdringt die Schamottscheibe 14 teilweise und erwärmt diese. Dadurch wird auch zwischen der kalten Einkopplungsöffnung 27 und der beispielsweise bis zu ca. 800 - 900 °C heiß werdenden Keramik 4 Wärme erzeugt, so daß der Ausbildung starker Temperaturgradienten längs des Ofeninnenraumes entgegengewirkt wird. Insbesondere kann erreicht werden, daß das Erwärmungsgut 4 vollständig von einer Wandung mit im wesentlichen einheitlicher Temperatur umgeben ist. Die durchdringende Mikrowellenstrahlung erzeugt am Ort der Dentalkeramik 4 eine rotierende Feldverteilung, d.h. daß das lokale Feld am Ort der Dentalkeramik zirkular polarisiert ist. Eine entsprechende rotierende Feldverteilung ist auch durch Drehung des Drehtellers zu erreichen, wobei in diesem Fall die Einkopplung auch so erfolgen kann, daß am Ort der Dentalkeramik 4 ein im wesentlichen linear polarisiertes, nichtrotierendes Feld entsteht. Durch die räumliche Veränderung des Mikrowellenfeldes am Ort der Dentalkeramik sind insbesondere auch solche Teile ausreichend gleichmäßig erwärmbar, die einen gewölbten, metallischen Unterbau aufweisen, auf der eine keramische Verblendungsschicht vorgesehen ist.

Anwendungsbeispiel

Die durch die Erfindung möglichen Vorteile werden anhand des nachfolgend geschilderten Ausführungsbeispieles deutlich, bei dem eine Krone mit keramischer Verblendung mit metallischem Unterbau zum einen mit Hilfe eines konventionellen Brennofens (Dentalbrennofen Multimat C der Firma DentSply) und andererseits mit Mikrowellenunterstützung in einem Hybrid-Ofen wärmebehandelt wurden. Zur Gerüstvorbereitung wird das als Unterbau dienende, gegossene oder galvanisierte Metallgerüst ausgearbeitet. Dazu wird das über die Präparationsgrenze des Zahnes hinausgehende Material zurückgeschliffen und dann mit $Al_2O_3$, mit Körnung von ca. 110 µm zur Aufrauhung der Oberfläche abgestrahlt. Die nachfolgende Verblendung wird in mehreren Schritten durchgeführt. Zunächst wird eine sog. Opakerpaste deckend auf das saubere und trockene Gerüst aufgetragen und der sog. Washbrand durchgeführt. Anschließend folgt nach nochmaligem Auftragen der Opakerpaste der sog. Opakerbrand. Diese beiden Brände dienen zum einen dem farblichen Abdecken des Metallgerüstes und zum anderen zum Aufbau eines besseren Haftverbundes zwischen Metall und Verblendungskeramik.

Mit Schulter- und Dentinmassen sowie den Schneidemassen wird dann die Zahnform modelliert sowie die Grundfärbung der Verblendung festgelegt. Mit Glasurmassen werden in den Glasurbränden die glatte Oberfläche sowie gewisse Transparenz- und Transluzenseffekte erzielt.

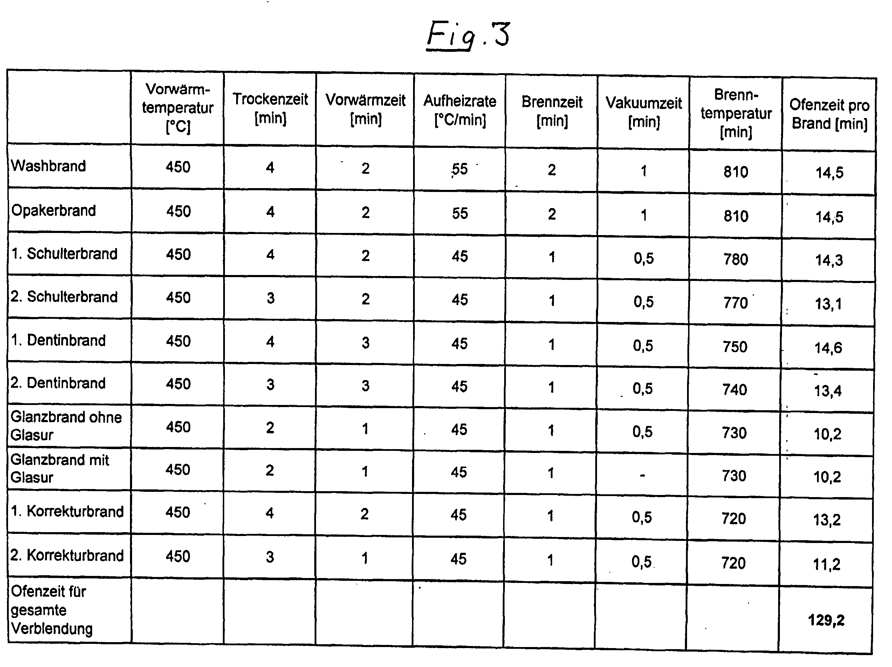

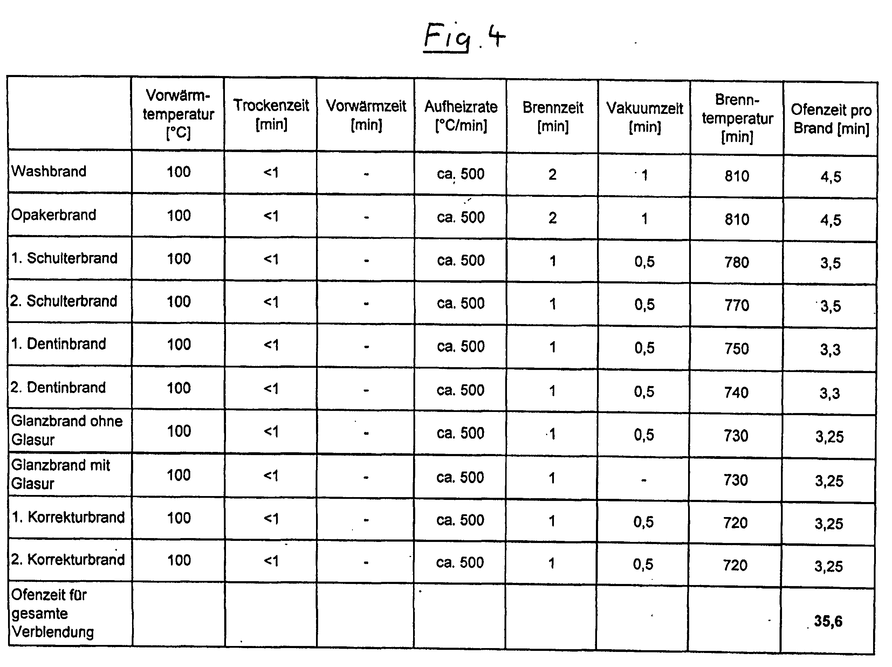

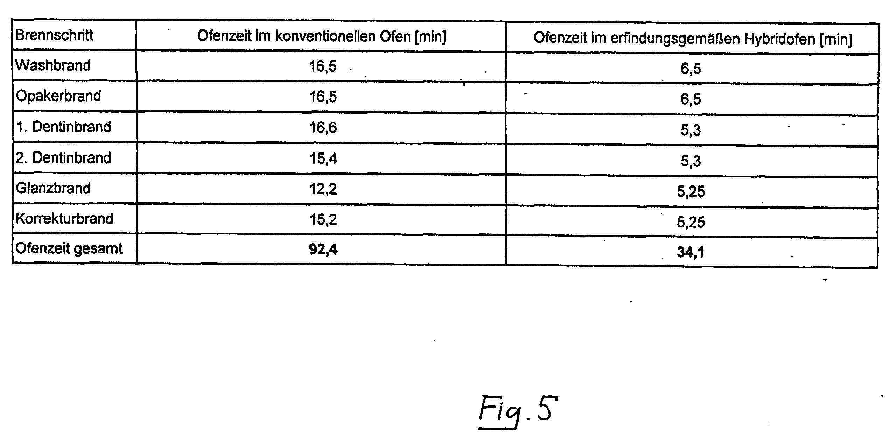

Bei der keramischen Verblendung werden die jeweiligen Massen mit Hilfe eines Pinsels in Handarbeit Schritt für Schritt aufgetragen (geschichtet), wobei die in den Tabellen (Fign. 3 bis 5) angegebene Reihenfolge eingehalten wird. Die Anzahl der zu applizierenden Massen und der dazugehörigen Brände, also auch der Zeitaufwand für die gesamte Verblendung, wird durch die Anforderungen und ästhetischen Ansprüche des Zahnarztes bzw. des Patienten an das fertige Präparat, beispielsweise die Krone, bestimmt und hängt maßgeblich von der Routine und den handwerklichen Fähigkeiten des Zahntechnikers ab. Die in den Tabellen der Fign. 3 und 4 aufgeführten Brände stellen die maximal notwendige Anzahl dar. Bei einem versierten Verarbeiter reichen in vielen Fällen ein Washbrand und ein Opakerbrand, zwei Dentinbrände sowie ein abschließender Glanzbrand und evtl. noch ein Korrekturbrand inklusive jeweils vorherigem Auftragen der jeweiligen Massen aus (vgl. Tabelle in Fig. 5). Die Verblendungen werden mit einer niedrigschmelzenden Verblendkeramik (Imagine ® he der Anmelderin) durchgeführt. In den Tabellen der Fign. 3 und 4 sind Abkühlzeiten, die wegen der Verglasung in der Regel maximal 2 Minuten dauern sollten, nicht berücksichtigt. Die Angaben in der Vergleichstabelle gemäß Fig. 5 verstehen sich dagegen inklusive einer pauschal mit 2 Minuten angenommenen Abkühlphase.

Der Vergleich der Tabellen in den Fign. 3 und 4 zeigt zum einen, daß bei erfindungsgemäßen Verfahren bei wesentlich niedrigeren Vorwärmtemperaturen (ca. 100 °C anstatt 450 °C) gearbeitet werden kann. Die nach jedem Keramikauftrag zweckmäßig durchzuführende Trocknung ist mit Mikrowellenunterstützung regelmäßig nach weniger als 1 Minute abgeschlossen, während bei konventioneller Trocknung mehrfach längere Trockenzeiten von typischerweise zwischen 2 und 4 Minuten nach jedem Auftrag in Kauf genommen werden müssen. Nachfolgende Vorwärmzeiten, die konventionell typischerweise zwischen 1 und 3 Minuten liegen, entfallen bei mikrowellenunterstützter Verfahrensführung. Ganz erhebliche Zeiteinsparungen ergeben sich bei der nachfolgenden Aufheizung auf die typischerweise zwischen 700 und ca. 800 °C liegenden Brenntemperaturen. Während mit Mikrowellenunterstützung Aufheizraten von mehreren Hundert Grad Celsius pro Minute, beispielsweise ca. 500 °C/min, erreichbar sind, sind die konventionellen Aufheizraten etwa eine Größenordnung langsamer und liegen typischerweise im Bereich von ca. 50 °C/min, so daß bei der Aufheizung bei jeder Schicht mehrere Minuten eingespart werden können. Die nachfolgende Haltezeit bei der Brenntemperatur, zu deren Beginn vorteilhafterweise die Umgebung der Probe zeitweise evakuiert wird, sind für beide Versuchsführungen gleich.

Der Vergleich der Tabellen in den Fign. 3 und 4 zeigt, daß bei Verwendung eines herkömmlichen Ofens die typischen ofenzeiten pro Brand zwischen ca. 10 und ca. 15 Minuten liegen und daß die Ofenzeit für eine gesamte Verblendung bei der maximal erforderlichen Anzahl von Bränden ca. 2 Stunden beträgt. Dagegen liegen beim erfindungsgemäßen Verfahren bzw. bei Verwendung eines entsprechenden Ofens die Ofenzeiten pro Brand (ohne Abkühlzeiten) zwischen ca. 3 und ca. 5 Minuten, so daß selbst bei maximal erforderlicher Anzahl von Bränden die Ofenzeit weniger als 45 Minuten beträgt, also weniger als 40 % der nach dem konventionellen Verfahren erforderlichen Ofenzeit.

Die Beispiele zeigen, daß durch die zusätzlich zu einer herkömmlichen Widerstandsheizung eingebrachte Mikrowellenstrahlung der Brennprozeß geeigneter Materialien, wie Dentalkeramik, mit deutlich geringerem Zeitaufwand bei zumindest gleichen Brennergebnissen realisierbar ist. Da die Ofenzeiten drastisch reduzierbar sind, wird auch die für die Herstellung von Dentalkeramiken erforderliche Gesamtzeit als Summe aller Arbeits- und Ofenzeiten beträchtlich verkürzt, so daß qualitativ hochwertige Dentalkeramiken bei Verwendung einer Mikrowellen-Zusatzheizung während des Herstellens deutlich kostengünstiger sein können.

**Patentansprüche**

1. Verfahren zur Herstellung von Dentalkeramiken, bei dem eine Dentalkeramik mindestens einem Wärmebehandlungsschritt unterzogen wird, **dadurch gekennzeichnet,dass** Mikrowellenstrahlung zum Aufheizen der Dentalkeramik auf die Brenntemperatur der Dentalkeramik eingesetzt wird.

2. Verfahren nach Anspruch 1, **dadurch gekennzeichnet, dass** bei dem Aufheizen der Dentalkeramik auf die Brenntemperatur Aufheizraten von mehr als 100°C/min, insbesondere zwischen ca. 200°C/min und ca. 600°C/min, erzeugt werden.

3. Verfahren nach Anspruch 1 oder Anspruch 2, **dadurch gekennzeichnet, dass** die Mikrowellenstrahlung vor dem Brennen zusätzlich zur Trocknung der Dentalkeramik eingesetzt wird, wobei vorzugsweise Temperaturen der Dentalkeramik von weniger als ca. 200°C. insbesondere von ca. 100°C, erzeugt werden.

**4.** Verfahren nach einem der vorhergehenden Ansprüche, **dadurch gekennzeichnet, dass** beim Aufheizen auf die Brenntemperatur zusätzlich mindestens eine weitere Heizung, insbesondere eine Wärmestrahlungsheizung, eingesetzt wird.

**5.** Verfahren nach einem der vorhergehenden Ansprüche, **dadurch gekennzeichnet, dass** vor oder während des Aufheizens auf die Brenntemperatur in der Umgebung der Dentalkeramik ein Unterdruck erzeugt wird, vorzugsweise ein Unterdruck von weniger als 200 mbar, insbesondere zwischen 50 mbar und 150 mbar, wobei der Unterdruck über einen Zeitraum zwischen ca. 30 Sekunden und ca. 5 Minuten, insbesondere zwischen ca. 1 Minute und ca. 2 Minuten, aufrechterhalten wird.

**6.** Verfahren nach einem der vorhergehenden Ansprüche, **dadurch gekennzeichnet, dass** ein räumlich veränderliches, insbesondere ein rotierendes Mikrowellenfeld erzeugt wird, wobei vorzugsweise die Dentalkeramik während der Einwirkung der Mikrowellenstrahlung mindestens zeitweise bewegt, insbesondere gedreht wird.

**7.** Verfahren nach einem der vorhergehenden Ansprüche, **dadurch gekennzeichnet, dass** die Temperatur der Dentalkeramik gemessen wird, wobei vorzugsweise mindestens ein Temperatursensor, insbesondere ein Thermoelement, derart im Bereich einer Dentalkeramik angeordnet ist, dass er mindestens teilweise durch einen metallischen Unterbau der Dentalkeramik gegen Mikrowellenstrahlung abgeschirmt wird.

**8.** Verfahren nach einem der vorhergehenden Ansprüche, **dadurch gekennzeichnet, dass** ein die Dentalkeramik umgebender Resonator verwendet wird, der derart auf die Dentalkeramik, insbesondere auf deren Oberfläche und Emissivität, abgestimmt ist, dass die Temperatur der Dentalkeramik maximal gleich der Temperatur des Resonators ist und dass zur Bestimmung einer Maximaltemperatur der Dentalkeramik die Temperatur des Innenraumes des Resonators, insbesondere in der Nähe der von außen zugänglichen Ofenwand, gemessen wird.

**Claims**

**1.** Method for producing dental ceramics, wherein a dental ceramic is subjected to at least one heat treatment step, **characterized in that** microwave radiation is used to heat the dental ceramic to the firing temperature of the dental ceramic.

**2.** Method according to Claim 1, **characterized in that** heat-up rates of more than 100°C/min, in particular between approx. 200°C/min and approx. 600°C/min, are generated when the dental ceramic is being heated up to the firing temperature.

**3.** Method according to Claim 1 or Claim 2, **characterized in that** the microwave radiation, prior to the firing step, is additionally used to dry the dental ceramic, preferably generating temperatures of the dental ceramic of less than approx. 200°C, in particular of approx. 100°C.

**4.** Method according to one of the preceding claims, **characterized in that** during heating up to the firing temperature, at least one further form of heating, in particular thermal radiation heating, is additionally used.

**5.** Method according to one of the preceding claims, **characterized in that** before or during the heating up to the firing temperature, a reduced pressure, preferably a reduced pressure of less than 200 mbar, in particular between 50 mbar and 150 mbar, is generated in the vicinity of the dental ceramic, the reduced pressure being maintained for a period of between approx. 30 seconds and approx. 5 minutes, in particular between approx. 1 minute and approx. 2 minutes.

**6.** Method according to one of the preceding claims, **characterized in that** a spatially variable, in particular a rotating, microwave field is generated, with the dental ceramic preferably being moved, in particular rotated, at least from time to time during the action of the microwave radiation.

**7.** Method according to one of the preceding claims, **characterized in that** the temperature of the dental ceramic is measured, at least one temperature sensor, in particular a thermocouple, preferably being arranged in the region of a dental ceramic in such a manner that it is at least partially shielded from microwave radiation by a metallic substructure of the dental ceramic.

8. Method according to one of the preceding claims, **characterized in that** a resonator surrounding the dental ceramic is used, which resonator is matched to the dental ceramic, in particular to its surface area and emissivity, in such a manner that the temperature of the dental ceramic is at most equal to the temperature of the resonator, and **in that** to determine a maximum temperature of the dental ceramic, the temperature of the interior of the resonator, in particular in the vicinity of the externally accessible furnace wall, is measured.

**Revendications**

1. Procédé de fabrication de céramiques dentaires, dans lequel on soumet une céramique dentaire au moins à une étape de traitement à chaud, **caractérisé en ce que** l'on utilise un rayonnement de micro-ondes pour porter la céramique dentaire à sa température de cuisson.

2. Procédé selon la revendication 1, **caractérisé en ce que** lorsqu'on porte la céramique dentaire à sa température de cuisson, on crée des vitesses d'échauffement supérieures à 100°C/min et en particulier comprises entre environ 200°C/min et environ 600°C/min.

3. Procédé selon la revendication 1 ou la revendication 2, **caractérisé en ce qu'**on utilise rayonnement de micro-ondes avant la cuisson aussi pour sécher la céramique dentaire, des températures de céramique dentaire inférieures à environ 200°C et en particulier à environ 100°C étant de préférence créées.

4. Procédé selon l'une des revendications précédentes, **caractérisé en ce que** l'on utilise en outre au moins un autre chauffage et en particulier un chauffage par rayonnement thermique lors du chauffage à la température de cuisson.

5. Procédé selon l'une des revendications précédentes, **caractérisé en ce qu'**avant ou pendant le chauffage à la température de cuisson, on produit dans l'environnement de la céramique dentaire une dépression qui est de préférence inférieure à 200 mbars et est en particulier comprise entre 50 mbars et 150 mbars et on la maintient pendant d'environ 30 secondes à environ 5 minutes et en particulier pendant d'environ 1 minute à environ 2 minutes.

6. Procédé selon l'une des revendications précédentes, **caractérisé en ce que** l'on produit un champ de micro-ondes qui varie dans l'espace et en particulier un champ tournant, la céramique dentaire étant déplacée et en particulier tournée au moins temporairement lors de l'action du rayonnement de micro-ondes.

7. Procédé selon l'une des revendications précédentes, **caractérisé en ce que** l'on mesure la température de la céramique dentaire, au moins un détecteur de température et en particulier un thermoélément étant de préférence agencés dans la zone d'une céramique dentaire de manière à être au moins partiellement protégés du rayonnement de micro-ondes par une base métallique de la céramique dentaire.

8. Procédé selon l'une des revendications précédentes, **caractérisé en ce que** l'on utilise un résonateur qui entoure la céramique dentaire et qui est adapté à celle-ci et en particulier à sa surface et à son émissivité, de telle sorte que la température de la céramique dentaire soit au maximum égale à celle du résonateur et **en ce que**, pour déterminer la température maximale de la céramique dentaire, on mesure la température de l'espace intérieur du résonateur, en particulier à proximité de la paroi du four accessible de l'extérieur.

Fig. 1

Fig. 2

## Fig.3

| | Vorwärm-temperatur [°C] | Trockenzeit [min] | Vorwärmzeit [min] | Aufheizrate [°C/min] | Brennzeit [min] | Vakuumzeit [min] | Brenn-temperatur [min] | Ofenzeit pro Brand [min] |
|---|---|---|---|---|---|---|---|---|
| Washbrand | 450 | 4 | 2 | 55 | 2 | 1 | 810 | 14,5 |
| Opakerbrand | 450 | 4 | 2 | 55 | 2 | 1 | 810 | 14,5 |
| 1. Schulterbrand | 450 | 4 | 2 | 45 | 1 | 0,5 | 780 | 14,3 |
| 2. Schulterbrand | 450 | 3 | 2 | 45 | 1 | 0,5 | 770 | 13,1 |
| 1. Dentinbrand | 450 | 4 | 3 | 45 | 1 | 0,5 | 750 | 14,6 |
| 2. Dentinbrand | 450 | 3 | 3 | 45 | 1 | 0,5 | 740 | 13,4 |
| Glanzbrand ohne Glasur | 450 | 2 | 1 | 45 | 1 | 0,5 | 730 | 10,2 |
| Glanzbrand mit Glasur | 450 | 2 | 1 | 45 | 1 | - | 730 | 10,2 |
| 1. Korrekturbrand | 450 | 4 | 2 | 45 | 1 | 0,5 | 720 | 13,2 |
| 2. Korrekturbrand | 450 | 3 | 1 | 45 | 1 | 0,5 | 720 | 11,2 |
| Ofenzeit für gesamte Verblendung | | | | | | | | 129,2 |

EP 1 060 713 B1

## Fig. 4

| | Vorwärm-temperatur [°C] | Trockenzeit [min] | Vorwärmzeit [min] | Aufheizrate [°C/min] | Brennzeit [min] | Vakuumzeit [min] | Brenn-temperatur [min] | Ofenzeit pro Brand [min] |
|---|---|---|---|---|---|---|---|---|
| Washbrand | 100 | <1 | - | ca. 500 | 2 | 1 | 810 | 4,5 |
| Opakerbrand | 100 | <1 | - | ca. 500 | 2 | 1 | 810 | 4,5 |
| 1. Schulterbrand | 100 | <1 | - | ca. 500 | 1 | 0,5 | 780 | 3,5 |
| 2. Schulterbrand | 100 | <1 | - | ca. 500 | 1 | 0,5 | 770 | 3,5 |
| 1. Dentinbrand | 100 | <1 | - | ca. 500 | 1 | 0,5 | 750 | 3,3 |
| 2. Dentinbrand | 100 | <1 | - | ca. 500 | 1 | 0,5 | 740 | 3,3 |
| Glanzbrand ohne Glasur | 100 | <1 | - | ca. 500 | 1 | 0,5 | 730 | 3,25 |
| Glanzbrand mit Glasur | 100 | <1 | - | ca. 500 | 1 | - | 730 | 3,25 |
| 1. Korrekturbrand | 100 | <1 | - | ca. 500 | 1 | 0,5 | 720 | 3,25 |
| 2. Korrekturbrand | 100 | <1 | - | ca. 500 | 1 | 0,5 | 720 | 3,25 |
| Ofenzeit für gesamte Verblendung | | | | | | | | 35,6 |

EP 1 060 713 B1

| Brennschritt | Ofenzeit im konventionellen Ofen [min] | Ofenzeit im erfindungsgemäßen Hybridofen [min] |
|---|---|---|
| Washbrand | 16,5 | 6,5 |
| Opakerbrand | 16,5 | 6,5 |
| 1. Dentinbrand | 16,6 | 5,3 |
| 2. Dentinbrand | 15,4 | 5,3 |
| Glanzbrand | 12,2 | 5,25 |
| Korrekturbrand | 15,2 | 5,25 |
| Ofenzeit gesamt | **92,4** | 34,1 |

Fig. 5

EP 1 060 713 B1